# EUROPEAN PATENT APPLICATION

(11) **EP 3 552 860 A1**
(43) Date of publication of application: **16.10.2019**
(21) Application number: 18305424.6
(22) Date of filing: 10.04.2018
(51) Int. Cl.: B60L 11/18, H01R 13/22, H02J 7/00

(54) **CHARGER PLUG AND CHARGING RECEIVER**

(71) Applicant: HAGER-ELECTRO SAS, 67210 Obernai (FR); Hager Electro GmbH & Co. KG, 66440 Blieskastel (DE)
(72) Inventor: Haenel, Frédéric, 67290 Lohr (FR); Kauffmann, Bruno, 67120 Dachstein (FR); Kraemer, Jacques, 67000 Strasbourg (FR); Meyer, Loic, 67114 Eschau (FR); Reiner, Ulrich, 67691 Hochspeyer (DE); Schmitt, Erwin, 67659 Kaiserlautern (DE); Simon, Michel, 60800 Dessenheim (FR)
(74) Representative: Nuss, Laurent

(57) **Abstract**

This invention relates to a charger plug (2) for supplying electric energy from a power supply to a battery of an electric vehicle, the charger plug (2) comprising at least a first electric connector (4) comprising at least a first electric contact (5a), the first electric connector (4) being arranged to be electrically connected with a corresponding second electric connector of a charging receiver, so that the at least first electric contact (5a) is electrically connected with corresponding first electric contact of the second electric connector,
charger plug (2) characterized in that the first electric connector (4) comprises a first support (15) comprising at least a first protrusion (9a) comprising a flat end (9'), which comprises the first electric contact (5a) having a surface (S1).

## Description

The invention relates to the field of electric vehicles. More specifically, the invention relates to a charger plug and to a charging receiver for an electric vehicle.

It is known from document US 2017/0096073 A1 to couple a charger plug, having an electric connector, which is part of an underground charging station and a charging receiver, having an electric connector, which is part of an electric vehicle and which is located on the bottom of the electric vehicle by way of guiding system. The electric connector of the charger plug and the electric connector of the charging receiver have to be mechanically and electrically coupled to enable a charging session and then mechanically and electrically decoupled. In some implementations, a laser guiding system or a camera can be used to ease the coupling. In other implementations, infrared illumination, mechanical locators such as tapered pins, ultraviolet illumination, radar scanning or optical guidance can be used. Charger plug and charging receiver, as well as guiding system are vulnerable to extreme temperatures, rain, snow, ice, external corrosion and dust, particularly when located respectively on the bottom of the electric vehicle and on the ground. For this reason, they may suffer from deterioration due to the outdoor conditions. Moreover, the use of guiding system makes the connection between the charger plug and the charging receiver more complex.

This invention has as its object to remedy to these drawbacks by proposing a charger plug and a charging receiver configured to be easily connected without using an accurate guiding system, configured to be easily disconnected and which can be configured to be protected from the outdoor conditions.

For this purpose, the present invention relates to a charger plug for supplying electric energy from a power supply to a battery of an electric vehicle, the charger plug comprising at least a first electric connector comprising at least a first electric contact, the first electric connector being arranged to be electrically connected with a corresponding first electric connector of a charging receiver, so that the at least first electric contact is electrically connected with corresponding first electric contact of the second electric connector,

charger plug characterized in that the first electric connector comprises a first support comprising at least a first protrusion comprising a flat end which comprises the first electric contact having a surface.

The invention also relates to a charging receiver for an electric vehicle comprising a battery, the charging receiver being suitable to be electrically connected to the battery and arranged to be electrically connected with the charger plug according to the invention, the charging receiver comprising at least a second electric connector arranged to be electrically connected with the first electric connector of the charger plug, the second electric connector comprising a second support comprising at least a planar first electric contact having a surface arranged to be electrically connected with corresponding first electric contact of the first electric connector of the charger plug.

The invention will be better understood using the description below, which relates to at least one preferred embodiment, given by way of non-limiting example and explained with reference to the accompanying drawings, in which
- figure 1 shows a bottom view of an electric vehicle comprising a charging receiver according to the invention, which have a planar first electric contact, a planar second electric contact and a planar third electric contact, and which is located on the bottom of the electric vehicle,
- figure 2A shows the planar first electric contact, the planar second electric contact and the planar third electric contact according to a non-limitative particularity of the invention, which have an hexagon shape,
- figure 2B shows the planar first electric contact, the planar second electric contact and the planar third electric contact according to another non-limitative particularity of the invention, which have a rectangular shape,
- figure 2C shows the planar first electric contact, the planar second electric contact and the planar third electric contact according to another non-limitative particularity of the invention, which have a circular shape,
- figure 3A shows a charger plug according to a first preferred embodiment of the invention comprising a first protrusion, a second protrusion and a third protrusion, each protrusion comprising a flat end, which comprises respectively the first electric contact, the second electric contact and the third electric contact,
- figures 3B and 3C show a charger plug according to another non-limitative particularity of the invention comprising an electrically insulated shield consisting in a telescopic sleeve,
- figure 3D shows a charger plug according to another preferred embodiment of the invention showing a first protrusion comprising a flat end, which comprises a first electric contact having a protruding contact surface, facing the second electric connector,
- figures 4A, 4B and 4C show an electric vehicle comprising the charging receiver according to the invention, located on the bottom of the electric vehicle and a charger plug according to a non-limitative particularity of the invention, located on the ground and comprising the electrically insulated shield, respectively in an initial position, an intermediate position and a final position.
- figures 5A and 5B show a charging receiver according to another non-limitative particularity of the invention comprising a protection lid and a charger plug according to another non-limitative particularity of the invention comprising means for opening the protection lid.

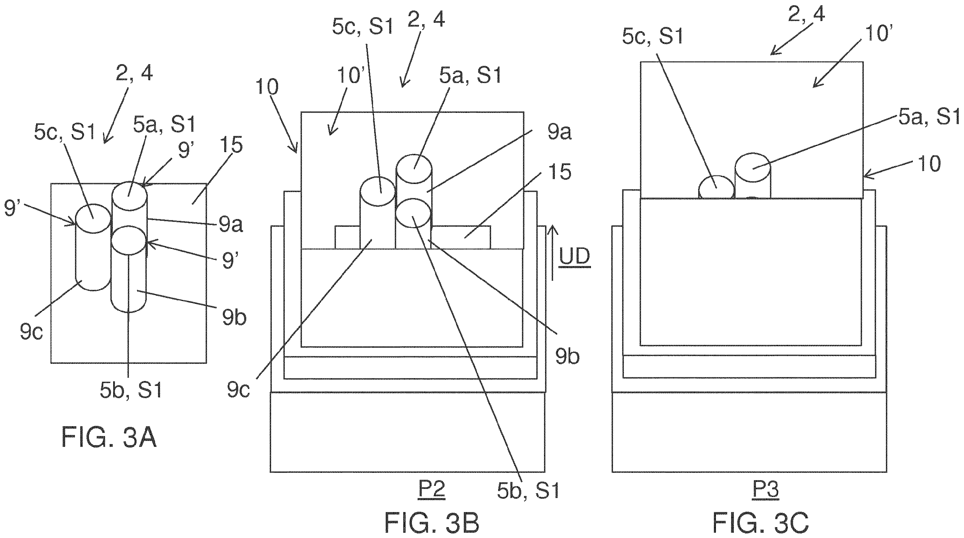

The figures 3A, 3B, 3C, 4A, 4B, 4C, 5A and 5B show a charger plug 2 for supplying electric energy from a power supply to a battery 19 of an electric vehicle 3, the charger plug 2 comprising at least a first electric connector 4 comprising at least a first electric contact 5a, the first electric connector 4 being arranged to be electrically connected with a corresponding second electric connector 7 of a charging receiver 8, so that the at least first electric contact 5a of the first electrical connector 4 is electrically connected with corresponding first electric contact 6a of the second electric connector 7,

According to the invention, the charger plug 2 is characterized in that the first electric connector 4 comprises a first support 15 comprising at least a first protrusion 9a comprising a flat end 9', which comprises the first electric contact 5a having a surface S1.

This arrangement of the first electric connector 4 provides a flat electrical interface, which enables the electric connection of the first electric contact 5a of the charger plug 2 with a planar first electric contact 6a of the charging receiver 8. Advantageously, this electric connection does not require any mechanical coupling between the charger plug 2 and the charging receiver 8. Thus, the electric connection is facilitated, as no great accuracy is needed. According to the present invention, no accurate guiding systems are required. Indeed, to enable the electric connection between the first electric contact 5a and the first electric contact 6a, it is only required that the surface S1 of the first electric contact 5a be in contact with the surface S2 of the planar first electric contact 6a. Moreover, only the flat end 9' of the first protrusion 9a, which protrudes from the first support 15, must be conductor. Preferably, the surface S1 of the first electric contact 5a of the charger plug 2 is smaller than the surface S2 of the first electric contact 6a of the charging receiver 8. Preferably, the surface S1 is planar.

In a first preferred embodiment, the first support 15 comprises the first protrusion 9a comprising a flat end 9', which comprises the first electric contact 5a having a surface S1, a second protrusion 9b comprising a flat end 9', which comprises a second electric contact 5b having a surface S1, a third protrusion 9c comprising a flat end 9', which comprises a third electric contact 5c having a surface S1, the first electric contact 5a being suitable to be electrically connected to a first AC line of the power supply, the second electric contact 5b being suitable to be electrically connected to a neutral line of the power supply, the third electric contact 5c being suitable to be electrically connected to a ground line (figure 3A).

Preferably, the charger plug 2 according to this first embodiment is arranged to be connected to the charging receiver 8 described, hereinafter according to the first embodiment of the invention.

In a second preferred embodiment (not shown), the first support 15 comprises the first protrusion 9a comprising a flat end 9', which comprises the first electric contact 5a having a surface S1, a second protrusion 9b comprising a flat end 9', which comprises a second electric contact 5b having a surface S1, a third protrusion 9c comprising a flat end 9', which comprises a third electric contact 5c having a surface S1, a fourth protrusion (not shown) comprising a flat end 9', which comprises a fourth electric contact (not shown) having a surface, a fifth protrusion (not shown) comprising a flat end, which comprises a fifth electric contact (not shown) having a surface S1, the first electric contact 5a being suitable to be electrically connected to a first AC line of the power supply, the second electric contact 5b being suitable to be electrically connected to a second AC line of the power supply, the third electric contact 5c being suitable to be electrically connected to a third AC line of the power supply, the fourth electric contact being suitable to be electrically connected to a neutral line of the power supply, the fifth electric contact being suitable to be electrically connected to a ground line.

Preferably, the charger plug 2 according to this second embodiment is arranged to be connected to the charging receiver 8 described hereinafter, according to the second embodiment of the invention.

In a third preferred embodiment, the first support 15 comprises the first protrusion 9a comprising a flat end 9', which comprises the first electric contact 5a having a surface S1, a second protrusion 9b comprising a flat end 9', which comprises a second electric contact 5b having a surface S1, a third protrusion 9c comprising a flat end 9', which comprises a third electric contact 5c having a surface S1, the first electric contact 5a being suitable to be electrically connected to a first negative DC line of the power supply, the second electric contact 5b being suitable to be electrically connected to a second positive DC line of the power supply and the third electric contact 5c being suitable to be electrically connected to a ground line (figure 3A).

Preferably, the charger plug 2 according to this third embodiment is arranged to be connected to the charging receiver 8 described hereinafter, according to a specificity of the second embodiment of the invention or to the third embodiment.

According to a non-limitative specificity of these first, second and third embodiments, the first electric connector 4 comprises a first communication contact (not shown) and a second communication contact (not shown), the first support 15 comprising a sixth protrusion (not shown) comprising a flat end, which comprises the first communication contact having a surface, and a seventh protrusion (not shown) comprising a flat end, which comprises the second communication contact having a surface.

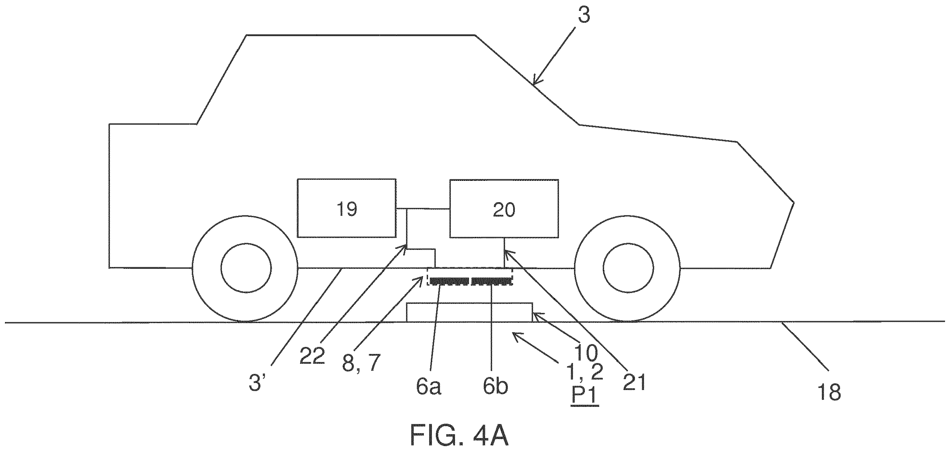

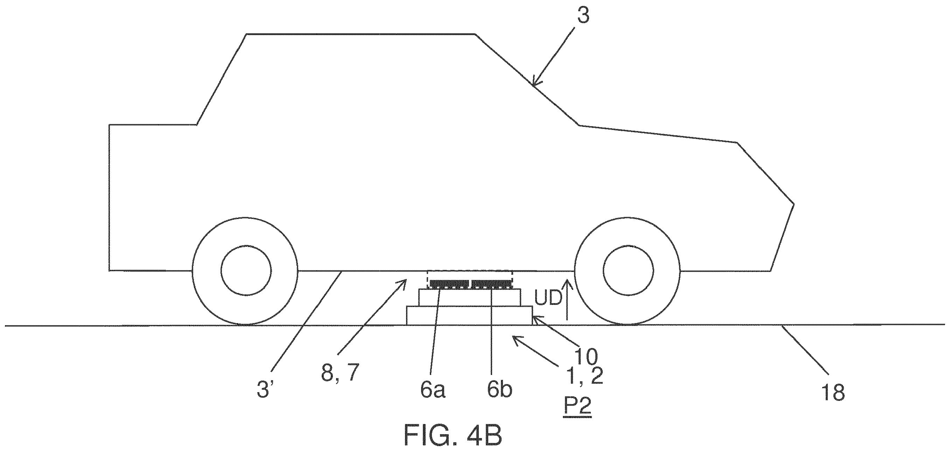

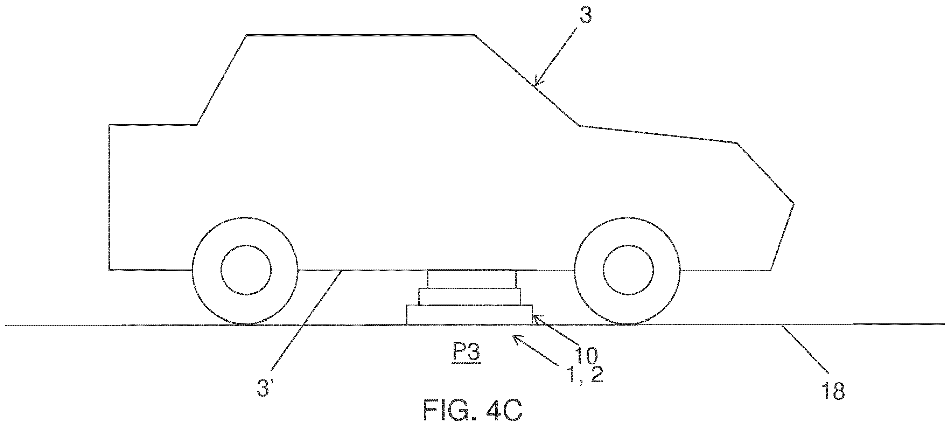

According to a non-limitative particularity of the invention shown in figures 3B, 3C, 4A, 4B and 4C, the charger plug 2 comprises an electrically insulated shield 10 having an open end 10', the shield 10 surrounding at least partially the protrusions 9a, 9b, 9c of the first electric connector 4.

The electrically insulated shield 10 is provided to electrically insulate the protrusions 9a, 9b, 9c of the first electric connector 4, particularly during a charging session, i.e. when the charger plug 2 and the charging receiver 8 are electrically connected. Thus, the shield 10 enables to prevent electric shocks during the charging session. The open end 10' enables the electric connection between the first electric connector 4 of the charger plug 2 and the second electric connector 7 of the charging receiver 8.

Preferably, the shield 10 is in a dielectric material, preferably a thermoplastic polymer like poly(methyl methacrylate) (PMMA), polypropylene (PP), polytetrafluoroethylene (PTFE), unplasticized polyvinyl chloride (PVC-U), unsaturated Polyester (UP).

According to a specificity of this particularity shown in figures 3B, 3C, 4A, 4B and 4C, the electrically insulated shield 10 consists in a telescopic sleeve.

This telescopic sleeve is provided to extend the dimension of the shield 10 in the upward direction UD, when the charger plug 2 is located on the ground 18. More particularly, when an electric vehicle 3 is located above the charger plug 2, the telescopic sleeve can be raised from an initial position PI, to an intermediate position P2 and then to a final position P3, where it contacts the bottom 3' of the electric vehicle 3. Thus, the shield 10 enables to surround the at least first electric contact 5a of the charger plug 2 and the at least first electric contact 6a of the charging receiver 8, only during a charging session, i.e. when the current flows.

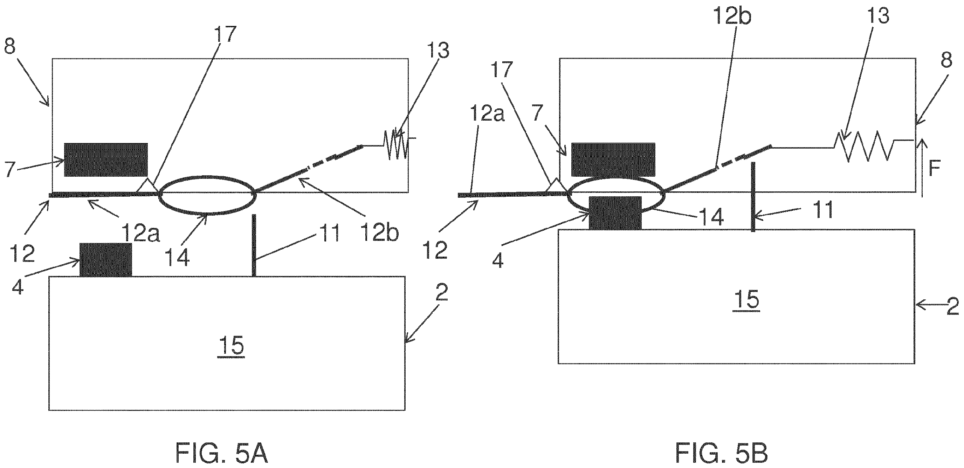

According to another non-limitative particularity of the invention shown in figures 5A and 5B, the first support 15 comprises means 11 arranged to apply a force F on a protection lid 12 of the charging receiver 8 to move the protection lid 12 from a closed position to an open position of the protection lid 12.

This arrangement enables the automatic opening of the protection lid 12 of the charging receiver 8, when the charger plug 2 is moved in the direction of the charging receiver 8.

Preferably, the first support 15 of the charger plug 2 is mounted on an arm (not shown) or a scissor lift (not shown) to move the charger plug 2 toward the charging receiver 8 in translation and/or in rotation.

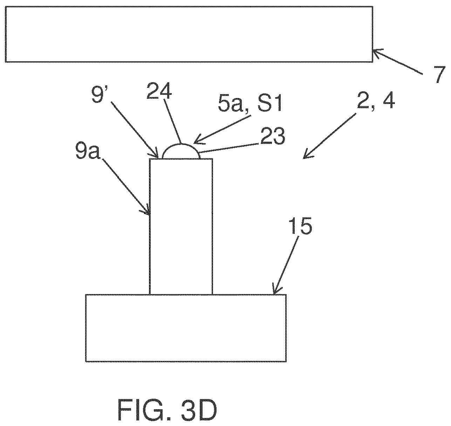

According to another preferred embodiment as shown figure 3D, the at least one (first, second, third, fourth, fifth, sixth, seventh) electric contact 5a, 5b, 5c consists in at least one protruding contact surface 23, which protrudes from the flat end 9'.

Advantageously, the protruding contact surface 23 is provided to increase the pressure between the top 24 of the protruding contact surface 23 and the planar (first, second, third, fourth, fifth, sixth, seventh) electric contact 6a, 6b, 6c of the second electric connector 7, when the at least one (first, second, third, fourth, fifth, sixth, seventh) electric contact 5a, 5b, 5c and the at least one planar (first, second, third, fourth, fifth, sixth, seventh) electric contact 6a, 6b, 6c contact. Thus, when the flat end 9' and the at least one (first, second, third, fourth, fifth, sixth, seventh) electric contact 5a, 5b, 5c are covered with dust, as the pressure becomes very high, the pressure can break the dust film between the protruding contact surface 23 and the planar (first, second, third, fourth, fifth, sixth, seventh) electric contact 6a, 6b, 6c of the second electric connector 7. In fact, the protruding contact surface 23 can exert an auto cleaning function on the contact area between the (first, second, third, fourth, fifth, sixth, seventh) electric contact 5a, 5b, 5c of the first electric connector 2 and the planar (first, second, third, fourth, fifth, sixth, seventh) electric contact 6a, 6b, 6c of the second electric connector 7. Thus, the quality contact is drastically increased.

Preferably, the at least one protruding contact surface 23 is a pin or a lug.

Preferably, the protruding contact surface 23 comprises a convex surface, for instance such as a hemispheric surface.

Preferably, the at least first electric contact 5a consists in a plurality of protruding contact surfaces 23, which protrude from the flat end 9'.

When the first support 15 comprises several (first, second, third, fourth, fifth, sixth, seventh) protrusions 5a, 5b, 5c, each of the flat end (9') of these protrusions 5a, 5b, 5c can be equipped with one, two, three or more protruding contact surface(s) 23.

The invention also relates to a charging station 1 comprising a charger plug 2 according to the invention.

Preferably, the charging station 1 comprises at least a power supply system (not shown) to provide electric energy.

Preferably, the charging station 1 comprises at least a supply cable (not shown) electrically connected to the charger plug 2, more particularly to the first electric connector 4 and to the power supply system.

Preferably, the charging station 1 comprises a cooling system (not shown) to maintain the battery 19 within an acceptable temperature range during a charging session.

Preferably, the charging station 1 comprises fluid lines (not shown), which are connected on the one hand to the charger plug 2, more particularly to a first fluid inlet duct (not shown) and a second fluid outlet duct (not shown), and on the other hand to the cooling system.

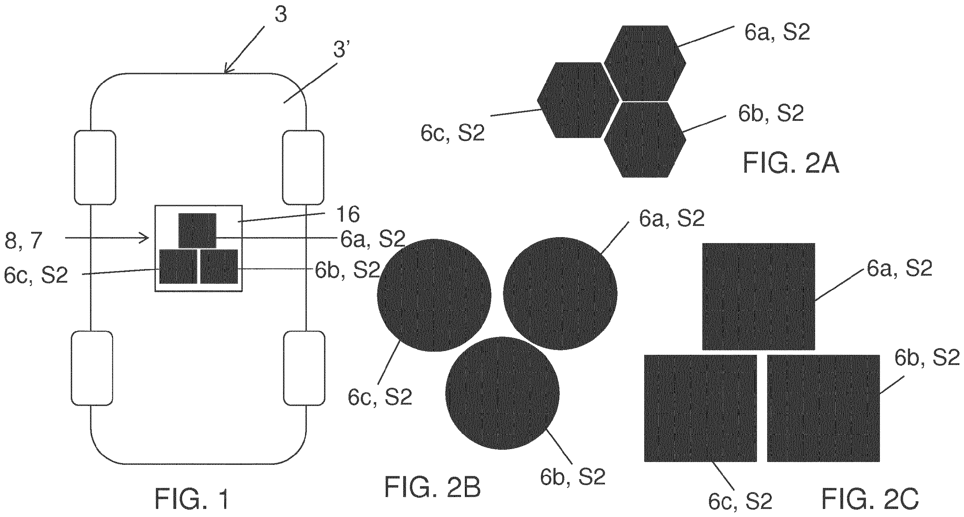

The figures 1, 2A, 2B, 2C, 4A, 4B, 4C, 5A and 5B, show, according to the invention, a charging receiver 8 for an electric vehicle 3 comprising a battery 19, the charging receiver 8 being suitable to be electrically connected to the battery 19 and arranged to be electrically connected with the charger plug 2 according to the invention, the charging receiver 8 comprising at least a second electric connector 7 arranged to be electrically connected with the first electric connector 4 of the charger plug 2, the second electric connector 7 comprising a second support 16 comprising at least a planar first electric contact 6a having a surface S2 arranged to be electrically connected with corresponding first electric contact 5a of the first electric connector 4 of the charger plug 2.

This arrangement of the second electric connector 7 provides a flat electrical interface, which enables the electric connection of the planar first electric contact 6a of the charging receiver 8 with the first electric contact 5a of the charger plug 2. Advantageously, this electric connection does not require any mechanical coupling between the charger plug 2 and the charging receiver 8, only a surface contact occurs. Thus, the electric connection is facilitated, as no great accuracy is needed. According to the present invention, no accurate guiding systems are required. Indeed, to enable the electric connection between the planar first electric contact 6a and the first electric contact 5a, it is only required that the surface S2 of the planar first electric contact 6a be in contact with the surface S1 of the first electric contact 5a. Preferably, the surface S2 of the planar first electric contact 6a of the charging receiver 8 is taller than the surface S1 of the first electric contact 5a of the charger plug 2.

According to non-limitative particularities of the invention, the at least planar first electric contact 6a has a circular shape (figure 2B) or a rectangular shape (figure 2C) or a square shape or an hexagon shape (figure 2A).

These particular shapes are provided to enable a compact arrangement of a plurality of planar electrical contacts 6a, 6b, 6c on the second support 16 of the charging receiver 8.

In a first preferred embodiment, the second support 16 comprises the planar first electric contact 6a having a surface S2, a planar second electric contact 6b having a surface S2, a planar third electric contact 6c having a surface S2, the planar first electric contact 6a being suitable to be electrically connected to a first AC line 21 electrically connected to the battery 19, the planar second electric contact 6b being suitable to be electrically connected to a neutral line electrically connected to the battery 19, the planar third electric contact 6c being suitable to be electrically connected to a ground line (figure 1).

Preferably, the charging receiver 8 according to this first embodiment is arranged to be connected to the charger plug 2, according to the first embodiment of the invention.

Preferably, the first AC line 21 is electrically and indirectly connected to the battery 19, by means of a rectifier 20, which converts an alternating current (AC) current in direct current (DC), which is required to charge the battery 19 (figure 4A).

According to a specificity of the first preferred embodiment (not shown), the second support 16 comprises a planar fourth electric contact (not shown) having a surface and a planar fifth electric contact (not shown) having a surface, the planar fourth electric contact being suitable to be electrically connected to a first negative DC line 22 electrically connected to the battery 19 and the planar fifth electric contact being suitable to be electrically connected to a second positive DC line electrically connected to the battery 19.

Preferably, the charging receiver 8 according to this specificity of the first embodiment is arranged to be connected to the charger plug 2, according to the first embodiment of the invention or to the third embodiment of the invention.

Preferably, the first negative DC line 22 and a second positive DC line are respectively electrically and directly connected to the battery 19.

According to a second preferred embodiment (not shown), the second support 16 comprises the planar first electric contact 6a having a surface S2, a planar second electric contact 6b having a surface S2, a planar third electric contact 6c having a surface S2, a planar fourth electric contact (not shown) having a surface and a planar fifth electric contact (not shown) having a surface, the planar first electric contact 6a being suitable to be electrically connected to a first AC line 21 electrically connected to the battery 19, the planar second electric contact 6b being suitable to be electrically connected to a second AC line electrically connected to the battery 19, the planar third electric contact 6c being suitable to be electrically connected to a third AC line electrically connected to the battery 19, the planar fourth electric contact being suitable to be electrically connected to a neutral line electrically connected to the battery 19, the planar fifth electric contact being suitable to be electrically connected to a ground line.

Preferably, the charging receiver 8 according to this second embodiment is arranged to be connected to the charger plug 2, according to the second embodiment of the invention.

Preferably, the first AC line 21, the second AC line, the third AC line are respectively electrically and indirectly connected to the battery 19, by means of a rectifier 20, which converts an alternating current (AC) current in direct current (DC), which is required to charge the battery 19.

According to a specificity of the second preferred embodiment, the second support 16 comprises a planar sixth electric contact (not shown) having a surface and a planar seventh electric contact (not shown) having a surface, the planar sixth electric contact being suitable to be electrically connected to a first negative DC line 22 electrically connected to the battery 19 and the planar seventh electric contact being suitable to be electrically connected to a second positive DC line electrically connected to the battery 19.

Preferably, the charging receiver 8 according to this specificity of first embodiment is arranged to be connected to the charger plug 2 according to the second embodiment of the invention or to the third embodiment of the invention.

Preferably, the first negative DC line 22 and a second positive DC line are respectively electrically and directly connected to the battery 19.

In a third preferred embodiment, the second support 16 comprises the planar first electric contact 6a having a surface S2, a planar second electric contact 6b having a surface S2, a planar third electric contact 6c having a surface S2, the planar first electric contact 6a being suitable to be electrically connected to a first negative DC line 22 electrically connected to the battery 19, the planar second electric contact 6b being suitable to be electrically connected to a second positive DC line electrically connected to the battery 19 and the third electric contact 6c being suitable to be electrically connected to a ground line (figure 1).

Preferably, the charging receiver 8 according to this third embodiment is arranged to be connected to the charger plug 2, according to the third embodiment of the invention.

Preferably, the first negative DC line 22 and a second positive DC line are respectively electrically and directly connected to the battery 19.

According to a specificity of the first, second and third preferred embodiments (not shown), the second electric connector 7 comprises a first communication contact (not shown) and a second communication contact (not shown), the second support 16 comprising a planar first communication contact having a surface and a planar second communication contact having a surface.

Preferably, the charging receiver 8 according to this specificity of the first, second and third preferred embodiments is arranged to be connected to the charger plug 2 comprising a first electric connector 4 comprising a first communication contact and a second communication contact, as mentioned above.

According to a non-limitative particularity of the invention shown in figures 5A and 5B, the charging receiver 8 comprises a protection lid 12 comprising a first part 12a and a second part 12b, the second part 12b being connected with the charging receiver 8 by return means 13, the protection lid 12 being mobile in translation between a closed position, where the first part 12a of the protection lid 12 covers at least the second electric connector 7 and an open position, where an opening 14 of the first part 12a of the protection lid 12 uncovers at least the second electric connector 7, the return means 13 being arranged to hold the protection lid 12 in the closed position, the protection lid 12 being arranged to move from the closed position to the open position, when a force F is applied on the second part 12b of the protection lid 12.

This protection lid 12 is provided to protect the second electric connector 7 from the outdoor conditions. In addition, this protection lid 12 can be automatically opened, when the charger plug 2 is moved in the direction of the charging receiver 8 and a force F is applied on the second part 12b of the protection lid 12 by the means 11, preferably consisting in a protrusion.

According to a specificity of this particularity shown in figures 5A and 5B, the first part 12a of the protection lid 12 comprises cleaning means 17.

These cleaning means 17 are provided to wipe the surface S2 of the at least planar first electric contact 6a, to clean it from dust and corrosion.

Preferably, the cleaning means 17 consist in rough or sharp-edged material, such as hard plastics, metal grater, or brush like material such as metal brush, hard fiber brush.

Preferably, the electric vehicle 3 comprises a battery 19.

Preferably, the electric vehicle 3 comprises a rectifier 20, which connects the first AC line 21 electrically and indirectly to the battery 19, and converts an alternating current (AC) current in direct current (DC), which one is required to charge the battery 19 (figure 4A).

Preferably, the rectifier 20 is part of an on board charger (not shown) of the electric vehicle 3.

Preferably, the electric vehicle 3 comprises at least a supply cable (not shown), which is electrically connected to the charging receiver 8, more particularly to the second electric connector 7, and to the battery 19.

Preferably, the electric vehicle 3 comprises a cooling system (not shown) to maintain the battery 19 within an acceptable temperature range during a charging session.

Preferably, the electric vehicle 3 comprises fluid lines (not shown), which are connected on the one hand to the charging receiver 8, more particularly to a third fluid outlet duct (not shown) and a fourth fluid inlet duct (not shown), and on the other hand to the cooling system of the electric vehicle.

The present invention also relates to an assembly of the charger plug 2 and the charging receiver 8 according to the invention.

The present invention also relates to an electric vehicle 3 comprising a charging receiver 8 according to the invention.

Of course, the invention is not limited to the at least one embodiment described and represented in the accompanying drawings. Modifications remain possible, particularly from the viewpoint of the composition of the various elements or by substitution of technical equivalents without thereby exceeding the field of protection of the invention.

## Claims

1. Charger plug (2) for supplying electric energy from a power supply to a battery (19) of an electric vehicle (3), the charger plug (2) comprising at least a first electric connector (4) comprising at least a first electric contact (5a), the first electric connector (4) being arranged to be electrically connected with a corresponding second electric connector (7) of a charging receiver (8), so that the at least first electric contact (5a) of the first electric connector (4) is electrically connected with corresponding first electric contact (6a) of the second electric connector (7),
charger plug (2) **characterized in that** the first electric connector (4) comprises a first support (15) comprising at least a first protrusion (9a) comprising a flat end (9'), which comprises the first electric contact (5a) having a surface (S1).

2. Charger plug according to claim 1, wherein the first support (15) comprises the first protrusion (9a) comprising a flat end (9'), which comprises the first electric contact (5a) having a surface (S1), a second protrusion (9b) comprising a flat end (9'), which comprises a second electric contact (5b) having a surface (S1), a third protrusion (9c) comprising a flat end (9'), which comprises a third electric contact (5c) having a surface (S1), the first electric contact (5a) being suitable to be electrically connected to a first AC line of the power supply, the second electric contact (5b) being suitable to be electrically connected to a neutral line of the power supply, the third electric contact (5c) being suitable to be electrically connected to a ground line.

3. Charger plug according to claim 1, wherein the first support (15) comprises the first protrusion (9a) comprising a flat end (9'), which comprises the first electric contact (5a) having a surface (S1), a second protrusion (9b) comprising a flat end (9'), which comprises a second electric contact (5b) having a surface (S1), a third protrusion (9c) comprising a flat end (9'), which comprises a third electric contact (5c) having a surface (S1), a fourth protrusion comprising a flat end, which comprises a fourth electric contact having a surface, a fifth protrusion comprising a flat end, which comprises a fifth electric contact having a surface, the first electric contact (5a) being suitable to be electrically connected to a first AC line of the power supply, the second electric contact (5b) being suitable to be electrically connected to a second AC line of the power supply, the third electric contact (5c) being suitable to be electrically connected to a third AC line of the power supply, the fourth electric contact being suitable to be electrically connected to a neutral line of the power supply, the fifth electric contact being suitable to be electrically connected to a ground line.

4. Charger plug according to claim 1, wherein the first support (15) comprises the first protrusion (9a) comprising a flat end (9'), which comprises the first electric contact (5a) having a surface (S1), a second protrusion (9b) comprising a flat end (9'), which comprises a second electric contact (5b) having a surface (S1), a third protrusion (9c) comprising a flat end (9'), which comprises a third electric contact (5c) having a surface (S1), the first electric contact (5a) being suitable to be electrically connected to a first negative DC line of the power supply, the second electric contact (5b) being suitable to be electrically connected to a second positive DC line of the power supply and the third electric contact (5c) being suitable to be electrically connected to a ground line.

5. Charger plug according to any of claims 1 to 4, wherein the first electric connector (4) comprises a first communication contact and a second communication contact, the first support (15) comprising a sixth protrusion comprising a flat end, which comprises the first communication contact having a surface (S1), and a seventh protrusion comprising a flat end, which comprises the second communication contact having a surface (S1).

6. Charger plug according to one of claims 1 to 5, wherein the charger plug (2) comprises an electrically insulated shield (10) having an open end (10'), the shield (10) surrounding at least partially the protrusion(s) (9a, 9b, 9c) of the first electric connector (4).

7. Charger plug according to claim 6, wherein the electrically insulated shield (10) consists in a telescopic sleeve.

8. Charger plug according to any of claims 1 to 7, wherein the first support (15) comprises means (11) arranged to apply a force (F) on a protection lid (12) of the charging receiver (8) to move the protection lid (12) from a closed position to an open position of the protection lid (12).

9. Charger plug according to any of claims 1 to 8, wherein said at least one first electric contact (5a) consists in at least one protruding contact surface (23), which protrudes from the flat end (9').

10. Charging receiver (8) for an electric vehicle (3) comprising a battery (19), the charging receiver (8) being suitable to be electrically connected to the battery (19) and arranged to be electrically connected with the charger plug (2) according to any of claims 1 to 9, the charging receiver (8) comprising at least a second electric connector (7) arranged to be electrically connected with the first electric connector (4) of the charger plug (2), the second electric connector (7) comprising a second support (16) comprising at least a planar first electric contact (6a) having a surface (S2) arranged to be electrically connected with corresponding first electric contact (5a) of the first electric connector (4) of the charger plug (2).

11. Charging receiver according to claim 10, wherein the at least planar first electric contact (6a) has a circular shape or a rectangular shape, a square shape or an hexagon shape.

12. Charging receiver according to any of claims 10 to 11, wherein the second support (16) comprises the planar first electric contact (6a) having a surface (S2), a planar second electric contact (6b) having a surface (S2), a planar third electric contact (6c) having a surface (S2), the planar first electric contact (6a) being suitable to be electrically connected to a first AC line (21) electrically connected to the battery (19), the planar second electric contact (6b) being suitable to be electrically connected to a neutral line electrically connected to the battery (19), the planar third electric contact (6c) being suitable to be electrically connected to a ground line.

13. Charging receiver according to claim 12, wherein the second support (16) comprises a planar fourth electric contact having a surface (S2) and a planar fifth electric contact having a surface (S2), the planar fourth electric contact being suitable to be electrically connected to a first negative DC line (22) electrically connected to the battery (19) and the planar fifth electric contact being suitable to be electrically connected to a second positive DC line electrically connected to the battery (19).

14. Charging receiver according to any of claims 10 to 11, wherein the second support (16) comprises the planar first electric contact (6a) having a surface (S2), a planar second electric contact (6b) having a surface (S2), a planar third electric contact (6c) having a surface (S2), a planar fourth electric contact having a surface and a planar fifth electric contact having a surface, the planar first electric contact (6a) being suitable to be electrically connected to a first AC line (21) electrically connected to the battery (19), the planar second electric contact (6b) being suitable to be electrically connected to a second AC line electrically connected to the battery (19), the planar third electric contact (6c) being suitable to be electrically connected to a third AC line electrically connected to the battery (19), the planar fourth electric contact being suitable to be electrically connected to a neutral line electrically connected to the battery (19), the planar fifth electric contact being suitable to be electrically connected to a ground line.

15. Charging receiver according to claim 14, wherein the second support (16) comprises a planar sixth electric contact having a surface (S2) and a planar seventh electric contact having a surface (S2), the planar sixth electric contact being suitable to be electrically connected to a first negative DC line (22) electrically connected to the battery (19) and the planar seventh electric contact being suitable to be electrically connected to a second positive DC line electrically connected to the battery (19).

16. Charging receiver according to any of claims 10 to 11, wherein the second support (16) comprises the planar first electric contact (6a) having a surface (S2), a planar second electric contact (6b) having a surface (S2), a planar third electric contact (6c) having a surface (S2), the planar first electric contact (6a) being suitable to be electrically connected to a first negative DC line (22) electrically connected to the battery (19), the planar second electric contact (6b) being suitable to be electrically connected to a second positive DC line electrically connected to the battery (19) and the third electric contact (6c) being suitable to be electrically connected to a ground line.

17. Charging receiver according to any of claims 10 to 16, wherein the second electric connector (7) comprises a first communication contact and a second communication contact, the second support (16) comprising a planar first communication contact having a surface (S2) and a planar second communication contact having a surface (S2).

18. Charging receiver according to any of claims 10 to 17, wherein the charging receiver (8) comprises a protection lid (12) comprising a first part (12a) and a second part (12b), the second part (12b) being connected with the charging receiver (8) by return means (13), the protection lid (12) being mobile in translation between a closed position where the first part (12a) of the protection lid (12) covers at least the second electric connector (7) and an open position where an opening (14) of the first part (12a) of the protection lid (12) uncovers at least the second electric connector (7), the return means (13) being arranged to hold the protection lid (12) in the closed position, the protection lid (12) being arranged to move from the closed position to the open position when a force (F) is applied on the second part (12b) of the protection lid (12).

19. Charging receiver according to claim 18, wherein the first part (12a) of the protection lid (12) comprises cleaning means (17).
